(19) Europäisches Patentamt
European Patent Office
Office européen des brevets

(11) **EP 1 437 897 A2**

(12) **EUROPEAN PATENT APPLICATION**

(43) Date of publication:
**14.07.2004 Bulletin 2004/29**

(51) Int Cl.7: **H04N 7/26**, H04N 1/32,
G06T 1/00

(21) Application number: **03445103.9**

(22) Date of filing: **17.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **27.09.2002 US 259106**

(71) Applicant: **MATSUSHITA ELECTRIC INDUSTRIAL CO., LTD.**
**Kadoma-shi, Osaka 571-8501 (JP)**

(72) Inventors:
• **Hong, Heather Yu**
**Princeton Junction New Jersey 08550 (US)**
• **Prabir, Bhattacharya**
**Plainsboro New Jersey 08536-1952 (US)**

(74) Representative: **Fritzon, Rolf et al**
**Kransell & Wennborg AB**
**P.O. Box 27834**
**115 93 Stockholm (SE)**

(54) **Methods and apparatus for embedding and detecting digital watermarks**

(57) One aspect of the present invention is a method for embedding a watermark in a digital movie. The method includes: buffering portions of an electronic digital representation of a digital movie in at least one digital representation domain; embedding an electronic watermark into at least one of the buffered digital representation domain of the movie; and presenting portions of the digital movie while the embedding is occurring.

*FIG. 1*

EP 1 437 897 A2

**Description**

BACKGROUND OF THE INVENTION

The present invention relates to methods and apparatus for protecting digital content from unauthorized copying and for the detection thereof, and is particularly applicable when the digital content to be protected is in the form of a digital movie.

Interest is increasing in protecting digital content from unauthorized copying. Digital content can be protected by encryption only up to the moment of presentation, where it becomes vulnerable to unauthorized usage. Embedding digital watermarks in digital content is one known method for protecting such presentations from unauthorized use. In the case of streaming media content watermarking, it is possible to hide some information imperceptibly in media content so as to provide information for determining the date, time, and place of post-decryption theft, such as the use of camcorders in theaters.

Known techniques for digital watermarking target unauthorized digital copying methods. These techniques are not applicable to preventing or tracking unauthorized analog on-the-fly copies, such as copies of digital cinema movies made by a hand-held camcorder, because these techniques do not survive the severe distortion that results when a camcorder is used to tape a digitally-reproduced motion picture. Moreover, methods that embed small amounts of information in media may not be suitable for on-the-fly digital watermarking such as that used for digital cinema content protection.

A number of data hiding techniques are known in the prior art. One known technique for data hiding is known as the "Patch Work" algorithm developed at M.I.T and described by Gruhl and Bender in "Information Hiding to Foil The Casual Counterfeiter," at pp.1-15 in *Information* Hiding 1998 LNCS 1525, Springer-Verlag, Berlin, which is hereby incorporated by reference in its entirety. This algorithm chooses a number of "patches" and then modifies the patches to change the statistical distribution for watermark embedding. Patch centers are defined in reference to the length and height of an image and a fixed pixel, for example, the [0, 0]*th* pixel of the image. Although this system is satisfactory for undistorted images, image distortion, such as rotation or nonlinear distortion, will introduce decoding errors.

Many other watermarking algorithms have been proposed. One popular fragile digital watermarking algorithm performs least significant bit modulation to embed a watermark W in the least significant bit (LSB) stream. Although this watermarking algorithm is among the easiest to implement in real time, it can be hindered or defeated by certain types of transformations and signal distortions.

U.S. Patent No. 5,848,155 to Cox et al., which is hereby incorporated in its entirely by reference, describes a spread spectrum watermarking algorithm. This algorithm forms the basis for some of the most popular robust watermarking algorithms. Although the Cox et al. algorithm and many improved versions thereof can withstand certain types of signal processing noise (such as that add by low pass filtering, re-compression, and white noise addition), it does not fare as well over DA-AD (digital to analog, followed by analog to digital) conversions, geometrical image distortion, and large scale down sampling transformations that occur in digital cinema camcorder copying.

In U.S. Patent Publication No. 20020106103 to Jones, entitled "System and method for embedding a watermark signal that contains message data in a digital image" and which is hereby incorporated by reference in its entirety, there is described a suprathreshold watermarking algorithm that is useful for digital cinema. However, as it is an image-based algorithm, it, too, fares less well when subject to various types of distortions, particularly geometrical image distortion.

SUMMARY OF THE INVENTION

There is therefore provided, in various configurations of the present invention, a method for embedding a watermark in a digital movie. The method includes: buffering portions of an electronic digital representation of a digital movie in at least one digital representation domain; embedding an electronic watermark into at least one of the buffered digital representation domains of the movie; and presenting portions of the digital movie while the embedding is occurring.

Some configurations of the present invention provide a method for decoding a watermark encoded movie. The method includes: determining a location of an object of reference in a video frame of a movie; determining a centroid, second moment, and third moment of the object of reference; locating watermark locations known in a movie metric utilizing a metric adjusted in accordance with the location of the object of reference and the centroid, second moment, and third moment; and decoding the watermark at the watermark locations located utilizing the adjusted metric.

Still other configurations of the present invention provide an apparatus for embedding a watermark in a digital movie. The apparatus is configured to: buffer portions of an electronic digital representation of a digital movie in at least one digital representation domain; embed an electronic watermark into at least one of the buffered digital representation domains of the movie; and present portions of the digital movie while the embedding is occurring.

Also, various configurations of the present invention provide an apparatus for decoding a watermark encoded movie. The apparatus is configured to: determine a location of an object of reference in a video frame of a movie; determine a centroid, second moment, and third moment of the object of reference; locate watermark locations known in a movie metric utilizing a metric adjusted in accordance with the location of the object of reference and the centroid, second moment, and third moment; and decode the watermark at the watermark locations located utilizing the adjusted metric.

Once a pirated copy of video is found, the content owner can usually afford to take considerable time to decode an embedded watermark. Therefore, although it is desirable that configurations of the present invention provide real time embedding of watermarks while a movie is playing (so that the exact time and location of the piracy can be determined), it is usually not necessary that decoding methods and devices match or even approach the embedding rate.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

BRIEF DESCRIPTION OF THE DRAWINGS

The present invention will become more fully understood from the detailed description and the accompanying drawings, wherein:

Figure 1 is a block diagram representing various configurations of an apparatus and method for providing multistratum watermarking of digital movies.

Figure 2 is a graph representing a watermarking weight $\gamma(t)$ applied during shots of a movie in some configurations of the present invention, when one of the shots comprises a very short sequence of frames.

Figure 3 is a graph representing a watermarking weight $\gamma(t)$ applied during shots of a movie in some configurations of the present invention, when a shot corresponding to the short shot in Figure 2 comprises a longer sequence of frames than in Figure 2.

Figure 4 is a representation of a partitioned data stream before and after watermarking added via temporal modulation.

Figure 5 is a representation of a simple image to be watermarked with the prior art "Patch Work" encoder.

Figure 6 is a representation of the image shown in Figure 5 with a selection of patch locations that might be used in a typical application of the prior art "Patch Work" encoder.

Figure 7 is a representation of the image shown in Figure 5 rotated 90°, but with patch locations assumed by a prior art "Patch Work" watermark decoder.

Figure 8 is an illustration of an undistorted drawing showing watermark embedding patches.

Figure 9 is a flow chart representing various methods of the present invention for defining and using watermark embedding patches.

Figure 10 is a flow chart representing various methods of the present invention for locating and decoding watermarks embedded utilizing embedding method configurations represented by Figure 9.

Figure 11 is a flow chart representing generalization of the methods represented by Figure 9 for watermarking methods other than patch embedding.

Figure 12 is a flow chart representing generalization of the methods represented by Figure 10 for watermarking methods other than patch embedding.

Figure 13 is an illustration of the introduction of a 90° rotational distortion in a picture, wherein a reference object is found relative to objects in the drawing.

Figure 14 is an illustration of the introduction of a flipping distortion in a picture, wherein reference directions are found relative to objects in the drawing.

Figure 15 is an illustration of the introduction of a nonlinear distortion in a picture, wherein locations and shapes of watermark embedding patches are found relative to centroids of objects.

Figure 16 is an illustration of the introduction of a scaling distortion in a picture, wherein locations and shapes of watermark embedding patches are found relative to centroids of objects.

Figure 17 is a representation of the cross-embedding of signatures between audio and video streams of a digital movie.

Figure 18 is a portion of the block diagram of Figure 1 showing a modification in which an additional buffer is provided for shots of the watermarked movie for buffering prior to display of the movie.

DETAILED DESCRIPTION OF THE INVENTION

The following description of the preferred embodiment(s) is merely exemplary in nature and is in no way intended to limit the invention, its application, or uses.

As used herein, "embedding a watermark into a video stream in real time" refers to a process in which the embedding process occurs as the video stream is being played or recorded, wherein the embedding does not perceptively alter the rate at which the reproduced video stream is played or recorded, if the rate is altered at all. A configuration that embeds "on-the-fly" is one that embeds in real time. Thus, one example of an "on-the-fly" embedding configuration is a configuration that embeds a watermark in a recorded video stream at the same time the video stream is being played back at its intended rate.

Various configurations of the present invention provide watermarking that can be embedded into a compressed video stream in real time, with high rate embedding capability, and survivability over severe distortion. In particular, configurations of the present invention provide survivability to successive distortions that might be introduced, for example, by clandestine or unauthorized re-recording of a video signal or picture. These distortions include those caused by digital to analog (DA) and analog to digital (AD) transformations; re-compression/transcoding transformation; geometrical transformation with slight rotation and cropping and high degree scaling transformation (each of which may be experienced, for example, by a movie surreptitiously re-recorded by a video camera brought into a movie theater by a patron); color transformation; and to temporal transformations including frame dropping and temporal jittering.

Various configurations of the present invention are useful for identifying a location or venue at which a movie was surreptitiously recorded. In these and various other configurations, it is sufficient that the embedded watermark comprise information identifying a presentation date, time, and place. Assuming that there are, or may be as many as one million digital cinemas, about 50 or fewer bits suffices to store this information robustly into an average length movie, e.g., about 90 minutes. The embedded bits include, for example, 15 bits corresponding to a presentation date, 5 to 11 bits that provide a presentation time with sufficient precision for identification purposes, and 20-24 bits for the presentation venue. In various configurations, the presentation venue bits comprise a unique identification number assigned to a theater, or even a digital presentation device or projector.

In some configurations of the present invention, a watermark W is embedded into a host video V, where $W$ comprises P segments W = {$W_1$, $W_2$, ... ,$W_P$}. For example, $W_1$ represents a digital cinema location and/or other identification, $W_2$ represents the time of the display of the watermarked work, etc. In addition, $V$ comprises $Q$ segments $V$ = {$V_1$, $V_2$, ... , $V_{Q_1}$} = {$V_{Q_1+1}$, $V_{Q_1+2}$,..., $V_{Q_2}$} = ... = {$V_{Q_z+1}$, $V_{Q_z+2}$,..., $V_{Q-1}$, $V_Q$} in one or more domains and spaces, such as the spatial domain, frequency domain, temporal domain, and bit domain. W may further comprise governing data, such as synchronization data, that aids in the extraction of the other watermarking data such as time and location data. Thus, some configurations of the present invention support a multi-stratum embedding of watermarking data:

$$V' = V + f(W) = V'_1 + V'_2 + \ldots + V'_{Q_1} \qquad (1)$$

$$= V'_{Q_1+1} + V'_{Q_1+2} + \ldots + V'_{Q_2} \qquad (2)$$

$$= \ldots$$

$$= V'_{Q_z+1} + V'_{Q_z+2} + \ldots + V'_{Q-1} + V'_Q, \qquad (3)$$

where

$$Q_1 < Q_2 < \ldots < Q_z < Q \qquad (4)$$

and

$$V'_q = V_q + f_q(W_q), \qquad (5)$$

where

4

$$W_q = \sum_{j=1,J} W_j, \qquad \forall q \in [1,Q], \ p \in [1,P], \ j \in [1,P] \ \text{and} \ J < P, \qquad (6)$$

and $f_q$ is a known watermarking function, or a function comprising one or more, or all of the inventive watermarking function configurations described herein.

In one simple configuration that is useful as an example, a watermark is partitioned into two segments, $W_1$ and $W_2$. A video $V$ with 10 shots is first partitioned in the temporal domain into 10 segments using shot-based segmentation. Then V is partitioned into the frequency domain for selected shots, such as shots 2, 4, and 5. Each of those shots are further partitioned into a low frequency band segment, a middle frequency band segment, and a high frequency band segment, so that $Q_1 = 10$, $Q_2 - Q_1 = 9$, $Q = 10 + 9 = 19$, $q \in [1,19]$, $p \in [1,2]$, $j \in [1,2]$, and J < 2. This simple example is limited to only two strata, but it will be understood that other configurations of the present invention need not be limited in this manner.

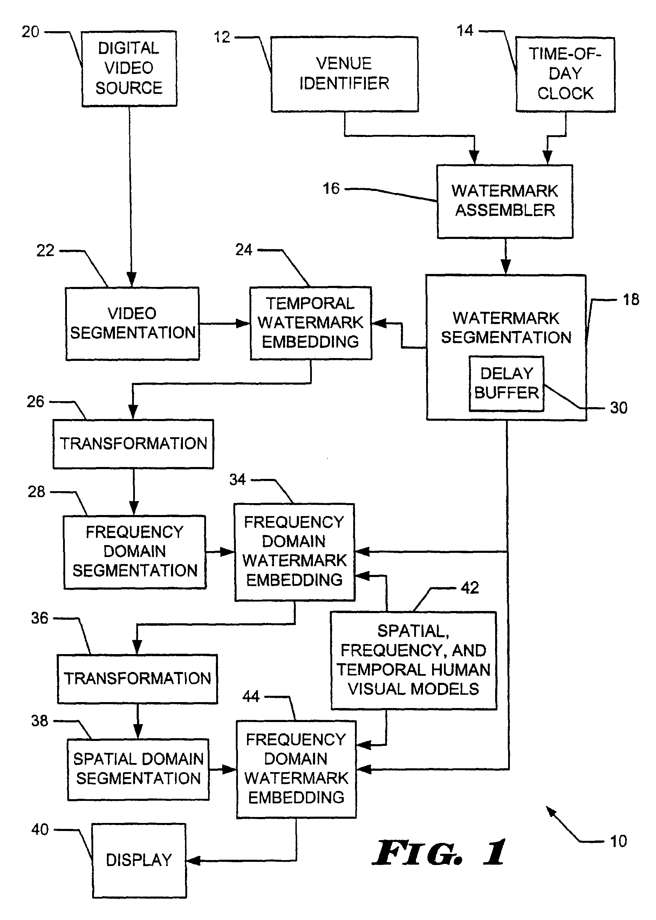

In various configurations and referring to Figure 1, an apparatus 10 for multistratum embedding of watermarks in a digital video stream comprises a venue identifier 12 and a time-of-day clock 14. Venue identifier 12 may, for example, be a fixed identification of presentation venue comprising 20-24 bits, or a unique serial number of the projection apparatus. (in most configurations, venue identifier 12 should not be easily changed by the apparatus operator or owner.) Time-of-day clock 14 may, for example, be a calendar that produces a 15-bit date and time data of sufficient precision to identify a particular presentation of a movie, e.g., 5 to 11 bits of data.

The venue identification provided by venue identifier 12 and the date and time provided by time-of-day clock 14 are combined into a watermark string by watermark assembler 16. Although some configurations of apparatus 10 allow the time stamp to change during the showing of a movie, other configurations of watermark assembler 16 use only the time provided by time-of-day clock at the beginning of a movie, as the movie start time and venue location are sufficient in most cases for identifying the venue and presentation time at which a surreptitious copy of a movie has been made. Watermark assembler 16 emits the assembled watermark W in P segments, as described above. When the final segment Wp is emitted, the emission restarts at the first segment, $W_1$. A function of the segments $f_q$ ($W_q$), as discussed above, is determined and stored in watermark segment buffer 18. Thus, portions of an electronic digital representation of a digital movie are buffered in at least one digital representation domain.

As the watermark segments are being emitted and stored, another parallel process occurs in which digital video source 20 is emitting segments $V_i$ into video segmentation buffer 22. Temporal watermark embedding module 24 embeds the current watermark segment 18 into the current digital video segment communicated by video segmentation buffer 22. The watermarked segment is then transformed by, for example, a decoding followed by a dequantization transformation module 26 if the digital video is in uncompressed format or a frequency transformation module 26 if the digital video is in uncompressed format, and placed in a frequency domain segment buffer 28. Meanwhile, frequency watermark embedding module 34 and spatial watermark embedding module 44 embed the corresponding watermark segment (subject to a possible delay 30) into the current digital video segment communicated by segment buffer 18 after subsequent transformations 26 and 36. Delay 30 is performed in some configurations to ensure that the same watermark segment (or a corresponding function of one or more segments) is embedded in a corresponding segment of a different stratum of the digital video at embedding modules 34 and 44 as at embedding module 24. However, this correspondence is not strictly required for configurations of the present invention to be successfully practiced. Different watermark embedding algorithms may be used for different watermark segment embedding in different frames in different segments of the digital video. For example, a sequence of video frames in the frequency domain can be partitioned into low frequency subbands, middle frequency subbands, and high frequency subbands. The watermark segments having the highest robustness requirement may be embedded into the middle frequency subbands segment using one algorithm, for example, a spread spectrum watermarking algorithm with relatively low watermark intensity. Watermark segments that have lesser robustness requirements may be embedded into the high frequency subbands segment using another algorithm, for example, significant bit modulation. Human visual models 42 in the temporal, spatial, and frequency domains are used to embed some or all of segments of the watermarks in modules 34 and 44. After embedding at embedding module 34, the watermarked video in the frequency domain is subjected to a transformation in module 36 to transform the video data sequence into the spatial domain used for embedding the remaining portion of the watermark in the spatial domain in module 44, and the watermarked video is used for displaying on digital theater display 38. Because of buffering, portions of the digital movie are presented even as embedding is occurring. In other words, the embedding can be considered as occurring in real time, or "on the fly."

Although Figure 1 is illustrative of configurations having dual-stratum embedding, it should be understood that other configurations of the present invention employ single stratum embedding, or multistratum embedding in more than two domains, or employ different domains for embedding than are shown in Figure 1.

A prior art technique of video digital watermarking using two-dimensional (2D) watermark insertion may be used in some configurations of the present invention as a suitable watermarking function $f_q$. Each frame of a video is treated as a separate image and a watermark is embedded in each frame using a known image watermarking technique designed for use on still images. The "strength" of a watermark (i.e., the amount or intensity of alteration of the image) is governed by a human visual model, such as a JND (Just Noticeable Difference) model from a JPEG (Joint Photographic Experts Group standard for lossy compressed 24 bit color image storage format) compression algorithm. Thus, in the case of an image:

$$I' = I + \alpha W \tag{7}$$

where $I$ is a host (i.e., input) image, $I'$ is the watermarked (i.e., output) image, $W$ is the watermark, and $\alpha$ is a scalar generated from JND.

Some configurations of the present invention operate on a video input $f(t)$ to insert a watermark $W$ in the video output $f'(t)$ using a prior art 2D watermark insertion technique described by an equation written as:

$$f'(t) = f(t) + \alpha W \tag{8}$$

where each frame of video input $f(t)$ is used to generate an image-based human visual model $JND(x, y)_{f(t)}$ that governs the watermark strength and $JND(x, y)_{f(t)}$ yields $\alpha$. That is,

$$f'(t) = f(t) + \alpha(JND(x, y)_{f(t)}W \tag{9}$$

As an improvement over prior art 2D watermark insertion techniques, some configurations of the present invention utilize novel three-dimensional (3D) watermarking techniques. More specifically, to improve robustness of the video watermark, a three-dimensional (3D) video human model $HVM(x, y, t)$ that is a function of $JND(x, y)$ and VD $(t)$ is used. Let $T$ be the temporal duration of a temporal human visual model. Let us assume that the current video frame is the $t$th frame, i.e., at time $t$. A total of $T$, $[t - \beta T, t + (1 - \beta)T]$ frames is used in some configurations of the present invention to derive how much distortion a current video frame can sustain. T can be derived from a human vision temporal contrast sensitivity function, defined using a heuristic function, derived via statistical analysis of a series of testing data, or some combination thereof. Then, for

$$t' = \{t - \beta T,...,t,...,t-(1-\beta)T\}, \tag{10}$$

let

$$VD(t) = g(f(t')) = g(f(t - \beta T),..., f(t),...., f(t + (1 - \beta)T)). \tag{11}$$

where $f(t)$ and $g(t)$ are functions that are derived, for example, from a human vision temporal constrast sensitivity function, defined using a heuristic function, derived via statistical analysis of a series of testing data, or a combination thereof, and $\beta$ is a scalar that is derived along with $T$, $f(t)$, and $g(t)$. By defining a function written $VM(t) = 1$ when VD $(t) > \delta$ and written $VM(t) = VD(t)$ otherwise, a watermark $W$ is added to video utilizing a relationship written as:

$$f'(t) = f(t) + (\gamma(t) \times (1 - VM(t))) \times (\alpha \times JND(x, y)_{f(t)}) \times W. \tag{12}$$

where $\alpha$ and $\delta$ are user-selectable parameters, $\alpha \leq 1$ corresponds to a watermark weight, and $\gamma(t)$ is a user-selectable function of $t$.

In some configurations of the present invention, a scene varying function $F(W, S_i)$ is used to further improve watermark survivability, where $S_i$ denotes the $i$th scene. Thus, a watermark $W$ is added to video utilizing a relationship written as:

$$f'(t) = f(t) + (\gamma(t) \times (1 - VM(t))) \times (\alpha \times JND(x, y)_{f(t)}) \times F(W, S_i). \tag{13}$$

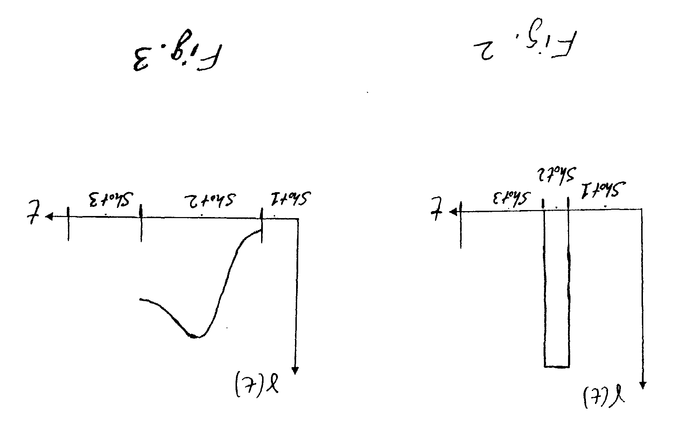

It will be appreciated that variations of equations 12 and 13 can be made to bset fit different requirements for different applications, such as by selection of appropriate $\alpha$ and $\gamma(t)$. For example, the human vision system's temporal contrast sensitivity is a function of motion vector velocity and shot transition frequency as well as many other parameters. For example, if the middle shot *Shot*2 of three consecutive shots *Shot*1, *Shot*2, and *Shot*3 has a very short duration, such as two frames long, the human vision system does not have the ability to easily detect artifacts introduced in the high frequency region during *Shot*2. In this case, a watermark can be embedded with high intensity in the spatial and frequency domains during *Shot*2. Hence, $\gamma(t)$ can be set to 1 during *Shot*2, i.e., $\gamma(t) = 1$ for $t \in Shot2$, as shown in Figure 2, and $\alpha$ can perhaps be set even higher than 1. These settings introduce a high watermark robustness over various types of severe distortion without introducing visible artifacts in the video. If *Shot*2 is a long shot, then a function $\gamma(t)$ such as that represented in Figure 3 may be more appropriate. in this case, the slowly increasing and then decreasing intensity of the watermark may result in a slow increase and then decrease of visual artifacts from frame to frame in *Shot*2 if the display frequency is extremely low, for instance 0.1 frame/sec. However, no visible artifacts can be observed if the regular display frequency (about 24 to 48 frames/second) is used. In a simplified configuration, one can use VD($t$) = 0, a constant $\alpha$, a spatial domain (image-based) JND function JND($x, y$) for the current frame $t$, from any prior art, and spread spectrum watermarking algorithm $F_{SS}$ to embed watermark $W$ on a frame-by-frame basis. In both cases discussed above, we then have:

$$f'(t) = f(t) + \gamma(t) \times \alpha \times \text{JND}(x,y)_t \times F_{SS}(W, S_i). \tag{14}$$

Thus, referring to Figure 1, a temporal watermark embedding module such as module 24 utilized in an apparatus configuration 10 such as that represented in the figure may utilize either the relationship written in equation 12 or the relationship written in equation 13 to embed a watermark W in video data V.

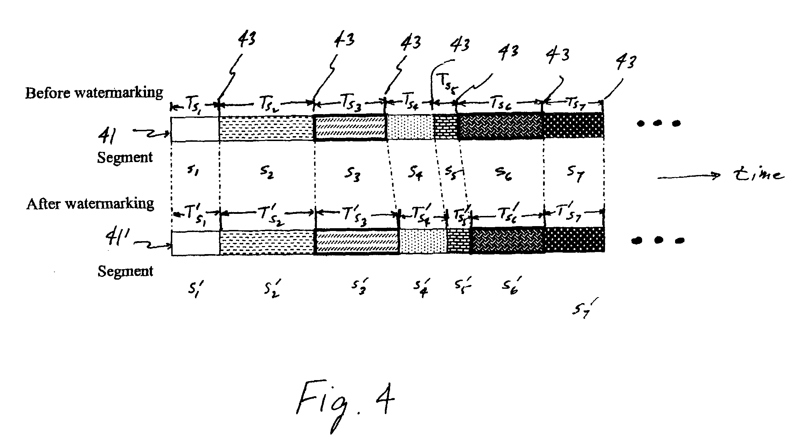

In some configurations of the present invention and referring to Figure 4, a watermark W is embedded into video data via temporal modulation. Although temporal modulation is a form of temporal watermark embedding, in that the embedding takes place in a time domain representation of the video signal, temporal modulation differs from other forms of temporal embedding in that the duration of segments are changed in accordance with the applied watermark. Video data stream 41 is partitioned based on a preselected criterion into $N$ segments $S_1, S_2,...,S_N$ along the temporal axis, with corresponding durations $T_{S_1}, T_{S_2}, ... , T_{S_N}$, where $T_S = T_{S_1} + T_{S_2} + ... + T_{S_N}$, with $V_{S_q} = V_{tsi} + V_{tsj}$, where $S_q \in [1, Q]$, $S_i$ and $S_j \in [1, S_N]$. For example, scene based partitioning results in video stream 41 being segmented at shot boundaries 43 so that pipelined video segmentation buffer 22 contains one shot or segment $S_1, S_2, ... ,S_N$ for modulation at any given time. After watermarking, the durations of some of segments $S'_1, S'_2, ..., S'_N$ in watermarked video stream 41' differ from the unwatermarked segments $S_1, S_2,..., S_N$ in the original video stream 41, depending upon the watermark that is applied.

To embed a watermark bit w in temporal watermark embedding module 24, $T_{S_i}$ and $T_{S_j}$ are modified as follows. Let

$$\Delta = kDT = k \begin{bmatrix} d1 \\ d2 \\ \vdots \\ dK \end{bmatrix} T \tag{15}$$

with key $k$. If $T_{S_i} < \Delta$ and $w = 1$, then $T'_{S_i} = T_{S_i} + \Delta T$, $T'_{S_j} = T_{S_j} - \Delta T$, such that $T'_{S_i} \geq \Delta$. Otherwise, if $T'_{S_i} > \Delta$ and $w = 0$, then $T'_{S_i} = T_{S_i} - \Delta t$, $T'_{S_j} = T'_{S_j} + \Delta t$, such that $T'_{S_i} \leq \Delta$. This generates $V'_{S_q} = V_{S_q} + w$. Although this example uses two shots (temporal duration) based modulation to embed one bit, it will be appreciated that one bit can be embedded using multiple shots modulation and multiple bits can be embedded using two or more shots (temporal durations) modulation.

For a video frame rate of ts frames/sec and defining $M = $ ts$\cdot T$,

$$s_i = \{f'_1, f'_2, ..., f'_{Mi}\} = \{f_{\sum h=1,j-1 \ Mh+1}, f_{\sum h=1,j-1 \ Mh+2}, ...f_{\sum h=1,j-1 \ Mh+Mi}\} \quad (16)$$

and $t = \Delta - T_{s_i}$. Thus, to embed a $w = 1$ watermark bit, for

$$m = \sum_{h=1,i-1} Mh + Mi + \mathsf{ts} \cdot t + 1 \text{ to } M \quad (17)$$

and

$$m \notin \left[ \sum_{h=1,j-1} Mh + 1, \sum_{h=1,j-1} Mh + Mj \right], \quad (18)$$

let

$$f_m = f_{m-\mathsf{ts}\cdot t}; \quad (19)$$

for

$$m \in \left[ \sum_{h=1,j-1} Mh + 1, \sum_{h=1,j-1} Mh + Mj \right], \quad (20)$$

let

$$f_m = f_{\frac{T_{s_j}}{T_{s_j}+t} (m-\sum_h=1,j-1 \ Mh+1)}; \quad (21)$$

and for

$$m = \sum_{h=1,i-1} Mh + Mi + 1 \text{ to } \sum_{h=1,i-1} Mh + Mi + \mathsf{ts} \cdot t, \quad (22)$$

let

$$f_m = \frac{f_{\sum h=1,i-1 \ Mh+Mi}}{\mathsf{ts} \cdot t} \left( \mathsf{ts} \cdot t - m + \sum_{h=1,i-1} Mh + Mi + 1 \right). \quad (23)$$

Some configurations of the present invention utilize patch locations for embedding bits in the spatial domain. For three dimensional (3D) embedding, watermark bits are embedded in a plurality of image frames of a video stream of a movie. One known method for embedding watermarks in patches using metrics defined by a reference point is the "Patch Work" watermark embedding algorithm of Gruhl and Bender, which is referenced and incorporated by reference above.

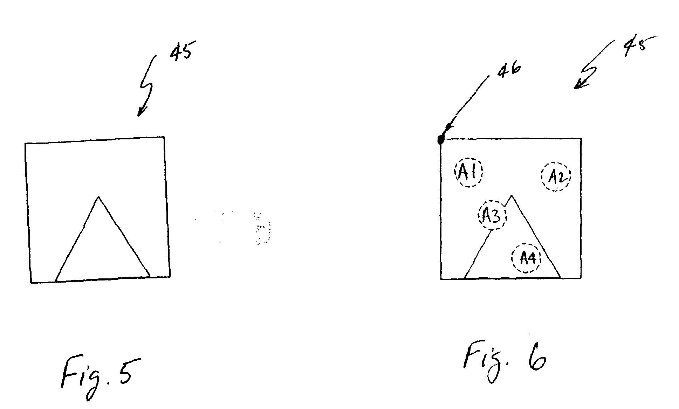

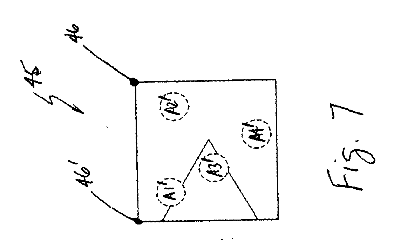

Consider, for example, the simplified representation of a picture or video frame 45 shown in Figure 5. Referring to Figure 6, a "Patch Work" watermark embedding module selects an origin pixel 46 (in this example, the upper left corner pixel) and a plurality of patch locations A1, A2, A3, and A4 for embedding watermark bits. A watermark decoding module in possession of Figure 6 and with knowledge of the location of origin pixel 46 and patch locations A1, A2, A3, and A4 can retrieve the embedded watermark from picture or video frame 45.

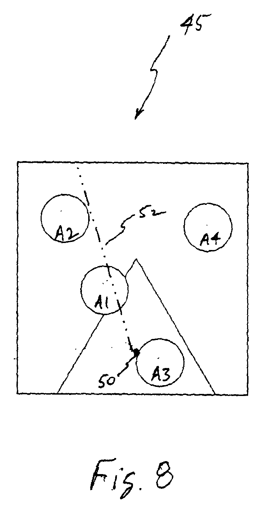

However, if picture or video frame 45 is rotated, the location of the origin pixel 46 will change and the decoding module will become confused. For example, suppose origin pixel 46 is in the upper left corner or picture or video frame 45, as shown in Figure 6. Referring to Figure 7, after undergoing a 90° clockwise rotation, origin pixel 46 is now in the upper right corner of picture or video frame 45.

Prior art Patch Work decoders would assume that pixel 46' in the upper left corner of Figure 7, and assume that patch locations A1', A2', A3', and A4' are the locations used for watermark embedding. This assumption would lead to decoding failure. When an image is modified geometrically by rotation, stretching, or compression, origin pixel 46 is moved or even cut out of the picture. Thus, the location of the watermark is changed in reference to the pixel of origin set before the geometrical modification. Furthermore, when an image is scaled, the watermark location is changed even if the pixel of origin is not changed.

In some configurations of the present invention and to provide more robustness against video distortion, mass moments are used to define reference points in video images. For example, some configurations of the present invention utilize mass moments as reference points to define a metric for the "Patch Work" watermark embedding algorithm. Other watermarking algorithms that are capable of being modified to use mass moments to define reference points and/or geometry are also suitable for configurations of the present invention.

Mass moments are used to define object-based metrics with relative unit length. The origin is set in reference to an object in the image, not necessarily within a border region of the image. Hence, even if several pixels of the border area of the image are cut, the origin will not change. In addition, the unit length of the metric is relative instead of fixed. When the image is scaled, the unit length is scaled accordingly, so that the watermark can be located invariantly.

Let $dA = dxdy$, $\rho(\alpha_i)$ be the relative intensity of a particular color of pixel $\alpha_i$, and $r_i$ is the distance between an origin of the image and pixel $\alpha_i$. Some configurations of the present invention therefore define a new origin and second and third moments utilizing relationships written:

$$\vec{r}_0 = \frac{\sum_i \rho_i \vec{r}_i}{\sum_i \rho_i} = (x_0, y_0) \tag{24}$$

$$R = \sqrt{\frac{\sum_i \rho_i (\vec{r}_0 - \vec{r}_i)^2}{\sum_i \rho_i}} \tag{25}$$

and

$$\vec{\Re} = \sqrt[3]{\frac{\sum_i \rho_i (\vec{r}_0 - \vec{r}_i)^3}{\sum_i \rho_i}}, \quad \Re_x = \sqrt[3]{\frac{\sum_i \rho_i (x_0 - x_i)^3}{\sum_i \rho_i}}, \quad \text{and} \quad \Re_y = \sqrt[3]{\frac{\sum_i \rho_i (y_0 - y_i)^3}{\sum_i \rho_i}}. \tag{26}$$

The centroid of the selected embedding patches and their relative length and width are thus determined utilizing the moments defined by equations 24, 25, and 26. Some configurations of the present invention also embed the object of reference in a picture or video frame 45 in a key to define a physical origin of the medium, thus adding an additional level of security and robustness.

The relative intensity of a particular color of the movie is considered to be one type of digital representation domain of the movie, along with the temporal, spatial, and frequency domains. Each color, or each orthogonal encoding representative of color, is considered to be a different digital representation domain of the movie. Watermark embedding can take place separately in each of the different digital representation domains of a movie, including each color or orthogonal encoding representative of color.

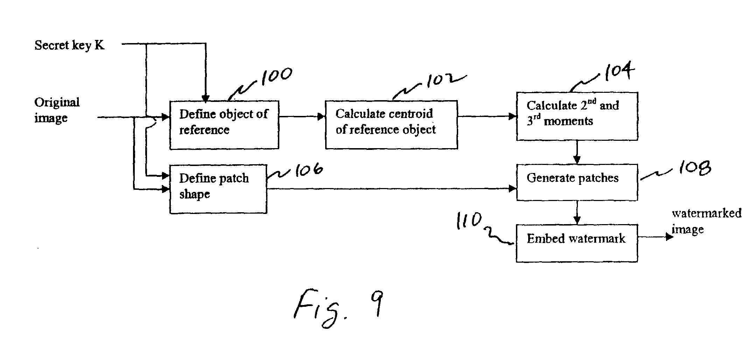

Referring now to Figure 8, a picture 50 is shown in which patches A1, A2, A3, and A4 have been selected for watermark embedding. The selection of patch locations and numbers of patches is performed in a standard manner, and may be consistent with known algorithms such as the "Patch Work" algorithm. However, in some configurations of the present invention, locations and shapes of patches A1, A2, A3, and A4 are defined utilizing a configuration of a method represented in Figure 9.

More particularly, and referring to Figure 8 and Figure 9, a secret key K is used to define 100 an object of reference 50 in the original undistorted image 45. The centroid of the reference object is then determined 102 using, for example, the relationships written as equation 24. The second and third moments are also determined 104 using, for example, relationships written as equations 25 and 26. Patch shapes A1, A2, A3, and A4 are also defined 106 using the secret key K and original image 45, and patches A1, A2, A3, and A4 are generated 108 (i.e., patch parameters, including location, size and shape, are determined) in accordance with the determined first, second, and third moments. Generated patches A1, A2, A3, and A4 are used 110 to embed a watermark W.

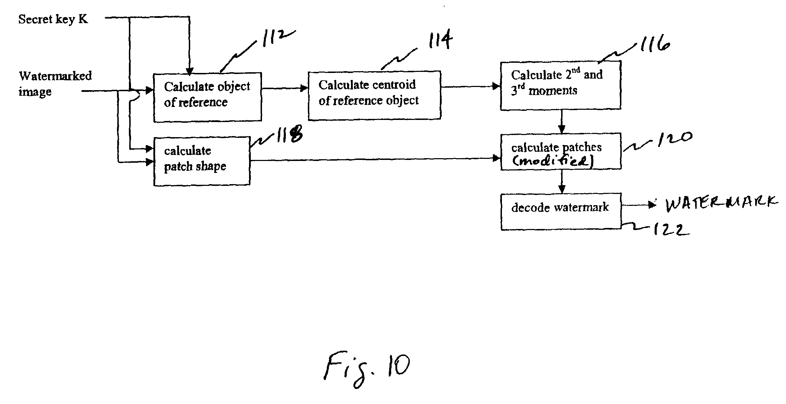

Decoding can be performed by an apparatus having knowledge of secret key K. More particularly, and referring to Figure 10, secret key K and a watermarked image are utilized to calculate 112 an object of reference. The centroid of the reference object is then determined 114, for example, utilizing the relationship written as equation 24. The second and third moments are also determined 116, utilizing relationships written as equation 25 and 26. The secret key K and the watermarked image are also utilized to determine patch shapes 118 which are modified 120 in accordance with the determined centroids, second moments, and third moments. For example, in some configurations using two bits of key K to define each patch shape, 01 is used to define a square shape, 00 is used to define a triangle, 10 is used to define a circle, and 11 is used to define a hexagon. (The mapping in any particular configuration may be arbitrarily chosen and need not use the same shapes or the same number of shapes used in this example.) Once the patches, such as A1, A2, A3, and A4, have their locations and shapes determined, the watermarks are decoded 122 from the watermarked image.

In some configurations, secret key K is transmitted to a decoder via a secure communication channel. For example, a content owner may hold the key K and use it as needed to check an allegedly pirated copy of a movie. In some configurations, the decoder is implemented only on the content owner' machine and the key K may be stored in the same device or other devices in an encrypted form. The content owner may make it available at the time of decoding. Secret key K in some configurations contains information such as the reference object or how to find the reference object, and/or other information.

The methods represented in Figure 9 and Figure 10 are readily extended to apply to movies and moving images, as is done in some configurations of the present invention. A movie distributed digitally performs a configuration of the embedding process represented in Figure 9 "on-the-fly," embedding a watermark of about 50 bits into images of the motion picture. Many configurations of the present invention utilizing 3D embedding techniques (in which two dimensions are spatial dimensions of the picture pixels and the third dimension is time) utilize more than one image frame for embedding all 50 bits of the watermark (i.e., a 50 bit watermark is distributed over more than one image frame). Corresponding decoder configurations thus analyze at least a corresponding number of image frames to extract the embedded watermark. These 50 bits may include a unique identification number representing the movie theater location at which a movie is presented or a unique serial number of an apparatus used to display the movie, as well as bits that identify the date and time of a particular showing of the movie. If a movie being displayed is recorded by a video camera surreptitiously (or otherwise) brought into the movie theater by, say, a patron or a projector operator, the movie is likely to have some amount of distortion, including loss of resolution, color shifts, rotation (due, for example, to the camera not being held at the same angle as the projection screen), scaling (e.g., the recorded movie does not fill the entire frame of the video recorder, or is too large for the frame size of the recorder), and non-linear distortion (e.g., the video camera field of view is not flat, the movie screen is viewed from an angle by the video camera, and/or the video camera is not perfectly focused on the movie screen). However, various watermark decoding configurations utilizing the method illustrated in Figure 10 are resistant to these distortions and the watermark can be readily determined by examination of the surreptitiously recorded video. (Temporal modulation components provide resistance to loss of resolution and to color shifts.) If the surreptitiously recorded video is recorded in analog format, the decoder performs a digitization step prior to decoding.

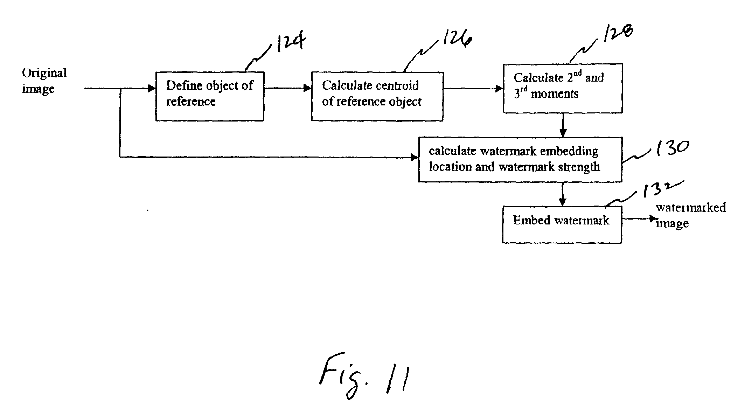

The method represented by Figure 9 can be generalized for other watermarking configurations. For example, and referring to Figure 8 and Figure 11, from an original image 45, an object of reference is defined 124, its centroid determined 126, and its second and third moments determined 128. Using the determined centroid and moments and the original image, watermark embedding location(s) and strength(s) are selected 130 and the watermark is embedded 132 at the selected locations(s) and strength(s).

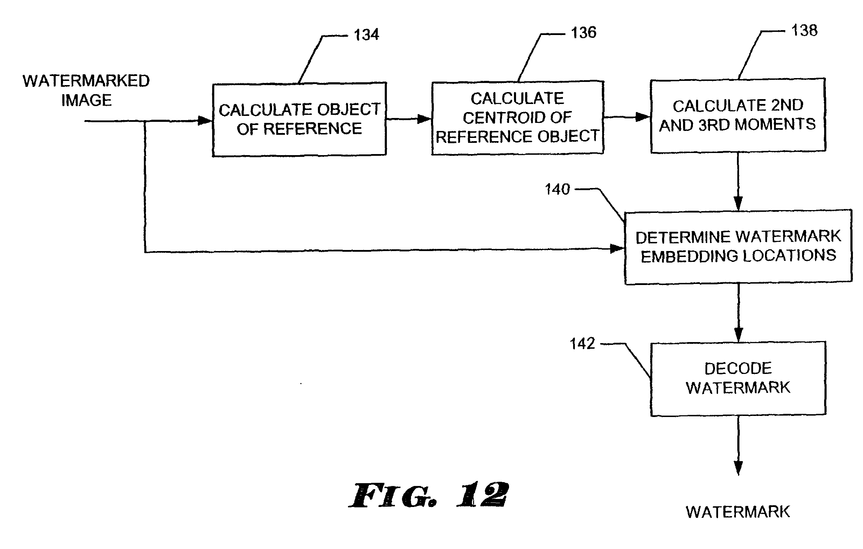

Decoding is performed similarly to that of Figure 10, except that the patch shape determination(s) patch determination(s) are generalized into a determination of watermark locations, from which the watermark is decoded. More particularly and referring to Figure 12, an object of reference is determined 134 from the watermarked image. The centroid of the reference object is also determined 136, and the second and third moments are also determined 138. From this information and the watermarked image, the watermark embedding locations are determined 140, and the watermarks are decoded 142.

This decoding process can also be described as determining a location of an object of reference in a video frame of a movie; determining a centroid, second moment, and third moment of the object of reference; locating watermark locations known in a movie metric utilizing a metric adjusted in accordance with the location of the object of reference and the centroid, second moment, and third moment; and decoding the watermark at the watermark locations located utilizing the adjusted metric.

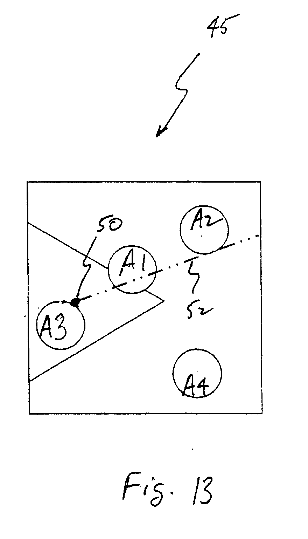

Several examples of the types of distortions that can be accommodated in various configurations of the present invention are illustrated in Figure 13, Figure 14, Figure 15, and Figure 16.

Referring to Figure 13, a rotational distortion of picture or video frame 45 (90° clockwise in this example, relative to Figure 8) does not result in the locations of patches A1, A2, A3, and A4 becoming confused in various configurations of the present invention, because reference origin 50 is located relative to objects in picture 45, as is a reference direction 52. Therefore, the locations of patches A1, A2, A3, and A4 in the centroid-adjusted coordinate system is invariant to a rotational transformation.

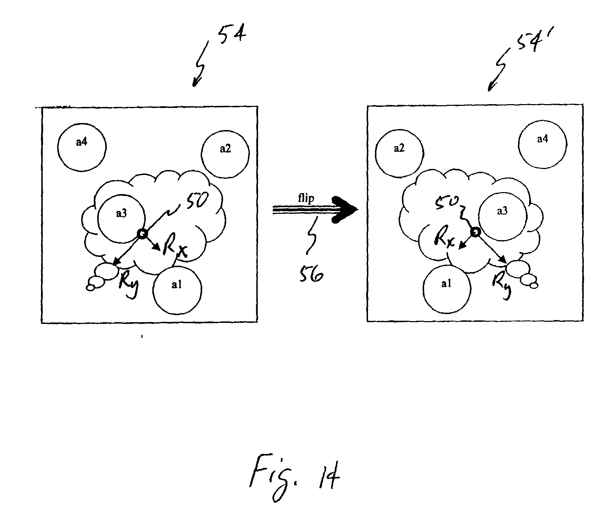

Referring to Figure 14, a picture or video frame 54 is flipped 56 to produce a flipped picture or video frame 54'. This transformation does not result in the location of patches A1, A2, A3, or A4 becoming confused in various configurations of the present invention, because reference origin 50 is located relative to objects in picture 54, as are reference directions $\vec{R}_x$ and $\vec{R}_y$. Therefore, the locations of patches A1, A2, A3, and A4 in the centroid-adjusted coordinate system are invariant to a rotational transformation. Reference directions are determined using the moments described above.

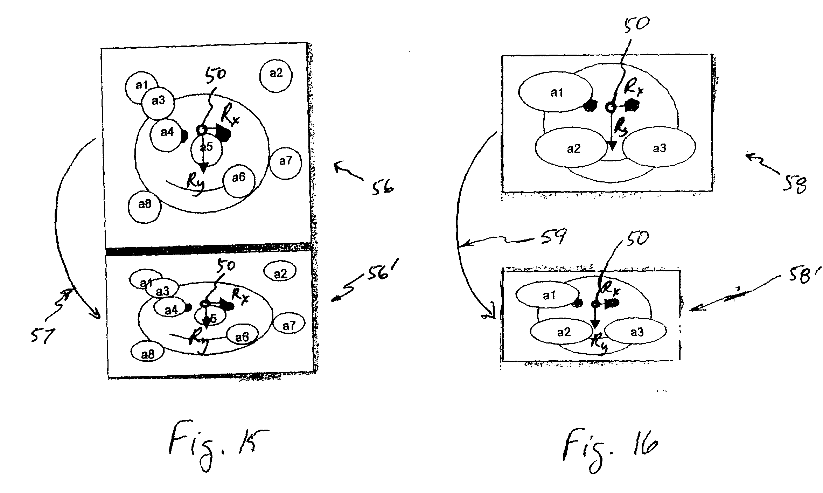

Referring to Figure 15, a picture or video frame 56 is subjected to a distortion 57 that reduces dimensions along reference direction $\vec{R}_y$. This distortion causes patches A1, A2, A3, A4, A5, A6, A7, and A8 in picture 56' to have distorted shapes. However, decoding is accomplished normally in various configurations of the present invention because the centroid-adjusted coordinate system is invariant to this transformation.

Referring to Figure 16, a picture or video frame 58 is subjected to a distortion 59 that reduces dimensions along reference direction $\vec{R}_y$. This distortion causes patches A1, A2, A3, A4, A5, A6, A7, and A8 in picture 58' to have smaller size than expected. However, decoding is accomplished normally in various configurations of the present invention because the centroid-adjusted coordinate system is invariant to this transformation.

Some configurations of the present invention comprise audiovisual cross-watermarking. More particularly, a digital movie usually comprises both a visual channel and an audio channel. Both the visual channel and the audio channel can be used to embed a watermark, in accordance with a tradeoff between robustness and watermark embedding capacity. For example, in some configuration of the present invention, temporal modulation as represented in Figure 4 is used to embed a watermark in both the audio channel and the video channel. Some configurations embed subwatermarks in audio and video channels in synchronization or embed synchronization marks in both the audio and video channels to generate a watermark that is robust against geometrical distortion.

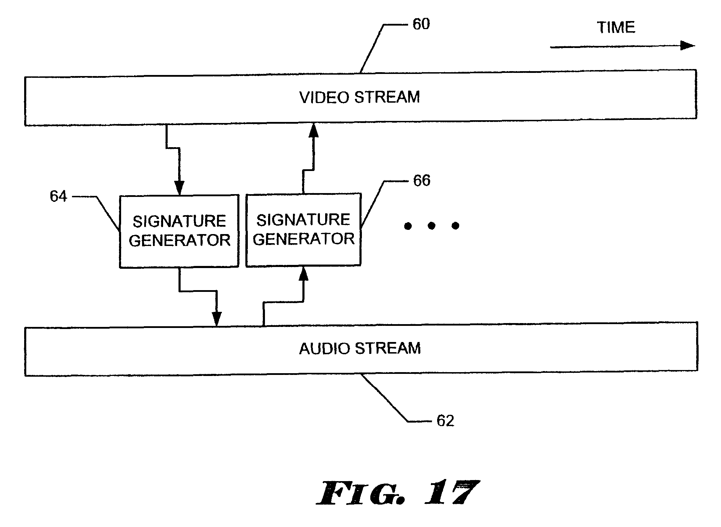

In some configurations and referring to Figure 1 and Figure 17, to prevent alteration of either track for illegal distribution purposes, temporal embedding block 24 and/or frequency domain embedding block 34 (and/or any additional domain embedding block[s]) is/are configured to generate a digital signature 64 of data in visual stream 60 and embed this signature in audio stream 62, and/or generate a digital signature 66 of data in audio stream 62 and embed this signature in video stream 60, or both. In this manner, data from which the authenticity of the audio channel and/or the video channel of a watermarked digital movie is embedded. Some configurations utilize blocks of data from one stream may be utilized to determine a signature that is embedded in the other stream on a slightly delayed basis, as represented in Figure 17. Pipelining can be used to reduce or eliminate this delay. Some configurations utilize a continuous stream of data, such as would a checksum generator, so that the signature is ready for immediate embedding. Implementation details for a suitable digital signature generator can be found in Yu et al., U.S. Patent No. 6,456,726, issued September 24, 2002, and entitled "Methods and apparatus for multi-layer data hiding," which is hereby incorporated by reference in its entirety.

In case of a movie having a high data hiding capacity (e.g., the "just noticeable difference" function allows a large number of bits to be stored per frame of the movie), some configurations of the present invention embed a watermark multiple times in different segments of the host video stream in different domains, using different embedding methods to provide increased robustness against various types of processing noise and distortion.

Because digital cinema movies may be distributed and saved in compressed mode, and because the watermarking methods of the present invention are performed while the movie is playing, many configurations of the present invention utilize real-time executable embedding processes.

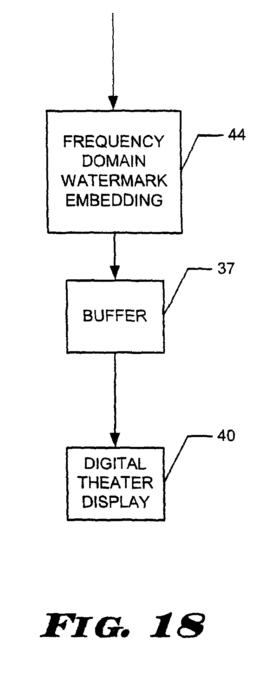

In some real-time executable embedding processes, a buffer is used to pre-store compressed movie data. For example, two groups of ten pictures or two shots (i.e., two sequence of a motion picture or a television program shot by one camera without interruption) are stored in the buffer immediately before being displayed. The second group of pictures or the second shot is then processed to embed the corresponding watermark bits while the first group of pictures or the previous shot is being played. More than two buffers can be utilized, or a circular buffering system can be utilized, as in at least one configuration of the present invention. For example, in some configurations of the present invention, an additional buffer 37 is provided between frequency domain watermark embedding module 44 and digital theater display 40 of Figure 1, as shown in Figure 18.

In some configurations of the present invention, to achieve real-time embedding performance, the watermark is embedded directly in the compressed data. For example, data is embedded in the frequency domain utilizing any suitable prior art frequency domain embedding technique. In another example, data is embedded in quantization indices. In many such configurations, decompression comprises decoding (e.g., Hoffman decoding), dequantization, and frequency-to-spatial transformation. One fast embedding technique utilized in some configurations modulates decoded quantization indices. After decoding, each index is evaluated. If the index number is eligible to be modified (i.e., smaller than the human perceptual noticeable threshold such as the Just Noticeable Difference or JND function), it is modulated to embed a single bit 1 or 0 by modifying the quantization by one or more steps. In those configurations that utilize an odd-even modification algorithm, one quantization step is the maximum modification amount. Thus, to embed a "1," the quantization is modified to reduce or increase one step if the quantization has an even step number. By examining the index immediately prior to and after the current index, a reduction step or an increase step is adapted to minimize the possible artifacts caused by the difference between the current index and its neighbors. In those configurations in which a modulo watermarking algorithm is used, a single bit is embedded using a series of indices by modifying one or more indices such that the combination of the series of indices is a desired value (for example, the sum of all of the indices is even or is larger than a predetermined number and smaller than another, utilizing a lookup table.)

Also, some configurations of the present invention provide a method for embedding a watermark in a digital movie that includes: buffering portions of an electronic digital representation of a digital movie in at least one digital representation domain; embedding an electronic watermark into at least one of the buffered digital representation domains of the movie embedding the entire watermark at least once in at least two channels (including visual data channels, audio data channels, and text data channels) of the digital representation of the movie, partitioning the watermark stream that includes both primary watermark data (such as time, location, etc.) and auxiliary (or governing) watermark data (such as synchronization data) into sub-watermark bit streams (watermark segments); embedding each sub-watermark bit stream into different segments of the digital movie; embedding at least one of the sub-watermark bit streams in at least one digital representation domain using at least one temporal human visual model; embedding the sub-watermark bit streams using at least two different watermarking algorithms or schemes; and presenting portions of the digital movie while the embedding is occurring.

It is thus evident that configurations of the present invention provide watermark embedding that is robust and resistant to various kinds of distortions that might be expected of surreptitiously duplicated movies recorded from presentations in digital theaters. Such recorded movies, once seized, can be analyzed despite the introduced distortions, to determine their authenticity and/or the venue and presentation time of the movie from which the recoding was made. These analyses can be performed notwithstanding distortions due to recording equipment or digital to analog or analog to digital conversions.

It will also be recognized that the various watermark embedding methods disclosed herein can be utilized either individually or in any compatible combination with one another to further increase robustness and resistance to distortion.

The description of the invention is merely exemplary in nature and, thus, variations that do not depart from the gist of the invention are intended to be within the scope of the invention. Such variations are not to be regarded as a departure from the spirit and scope of the invention.

**Claims**

1. A method for embedding a watermark in a digital movie, said method comprising:

    buffering portions of an electronic digital representation of a digital movie in at least one digital representation domain;

    embedding an electronic watermark into at least one said buffered digital representation domain of the movie; and

    presenting portions of the digital movie while said embedding is occurring.

2. A method in accordance with Claim 1 wherein said embedding the watermark comprises embedding a watermark uniquely indicative of a digital presentation device or projector, or indicative or the venue of a theater.

3. A method in accordance with Claim 2 wherein said embedding the watermark comprises embedding a watermark indicative of the venue of a theater.

**4.** A method in accordance with Claim 2 wherein said embedding the watermark further comprises embedding a watermark indicative of the time of said presenting the movie.

**5.** A method in accordance with Claim 4 wherein said embedding the watermark into at least one said digital representation domain of the movie comprises embedding the watermark into a plurality of digital representation domains of the movie.

**6.** A method in accordance with Claim 5 wherein said plurality of digital representation domains comprise at least a temporal domain and a frequency domain.

**7.** A method in accordance with Claim 2 wherein said embedding the watermark into the movie further comprises embedding portions of said watermark across plural frames of the movie.

**8.** A method in accordance with Claim 7 wherein said watermark includes not more than 50 bits.

**9.** A method in accordance with Claim 1 wherein said embedding said watermark comprises generating an image-based human visual model $JND(x, y)_{f(t)}$ that governs watermark strength $\alpha$, wherein $f(t)$ is a frame of video from the movie, and wherein the watermarked frame $f'(t)$ is written:

$$f'(t) = f(t) + \alpha(JND(x, y)_{f(t)})W,$$

wherein W is the watermark and t is time.

**10.** A method in accordance with Claim 1 wherein said embedding said watermark comprises generating an image-based human visual model $JND(x,y)_{f(t)}$ that governs watermark strength $\alpha$, wherein $f(t)$ is a frame of video from the movie, wherein the watermarked frame $f'(t)$ is written:

$$f'(t) = f(t) + ((\gamma(t) \times (1 - VM(t)))) \times (\alpha \times JND(x, y)_{f(t)}) \times (W),$$

wherein t is time, W is the watermark, $\gamma(t)$ is a function of $t$, $\alpha$ is a parameter corresponding to a watermark weight; and $VM(t) = 1$ when $VD(t) > \delta$ and $VM(t) = VD(t)$ otherwise, where $\delta$ is a parameter, and $VD(t)$ is a three dimensional video human model.

**11.** A method in accordance with Claim 1 wherein said embedding said watermark comprises generating an image-based human visual model $JND(x, y)_{f(t)}$ that governs watermark strength $\alpha$, wherein $f(t)$ is a frame of video from the movie, wherein the watermarked frame $f'(t)$ is written:

$$f'(t) = f(t) + \gamma(t) \times \alpha \times JND(x,y)_t \times F_{SS}(W, S_i)$$

wherein $W$ is the watermark, $\gamma(t)$ is a function of $t$, $F_S S(W, S_i)$ is a spread spectrum watermarking algorithm that embeds watermark $W$ on a frame-by-frame basis; $S_i$ denotes the ith scene, and $\alpha$ is a parameter.

**12.** A method in accordance with Claim 1 wherein said embedding the watermark comprises:

partitioning a video data stream of the movie based on a preselected criterion into $N$ segments $S_1, S_2, ..., S_N$, with corresponding durations $T_{S_1}, T_{S_2},...,T_{SN}$, and changing durations of some of the segments, depending upon the watermark that is applied.

**13.** A method in accordance with Claim 1 further comprising defining reference points in video images of the movie utilizing mass moments and embedding a watermark in locations of video frames relative to the defined reference points.

**14.** A method in accordance with Claim 13 wherein $dA = dxdy$, $\rho(a_i)$ is the relative intensity of a particular color of pixel $a_i$, and $r_i$ is the distance between an origin of the image and pixel $a_i$, and said defining reference points in video images of the movie utilizing mass moments further comprises defining a new origin and second and third moments utilizing relationships written:

$$\vec{r}_0 = \frac{\sum_i \rho_i \vec{r}_i}{\sum_i \rho_i} = (x_0, y_0) \,,$$

$$R = \sqrt{\frac{\sum_i \rho_i (\vec{r}_0 - \vec{r}_i)^2}{\sum_i \rho_i}}$$

and

$$\vec{\Re} = \sqrt[3]{\frac{\sum_i \rho_i (\vec{r}_0 - \vec{r}_i)^3}{\sum_i \rho_i}}, \quad \Re_x = \sqrt[3]{\frac{\sum_i \rho_i (x_0 - x_i)^3}{\sum_i \rho_i}}, \quad \text{and} \quad \Re_y = \sqrt[3]{\frac{\sum_i \rho_i (y_0 - y_i)^3}{\sum_i \rho_i}}.$$

15. A method in accordance with Claim 13 further comprising embedding a key or object of reference in a video frame of the movie to define a physical origin.

16. A method in accordance with Claim 13 wherein said defining reference points in video images of the movie further comprises defining an object of reference; determining the centroid of the object of reference; and determining the second moment and third moment of the object of reference;
and further wherein said embedding a watermark in locations of video frames relative to the defined reference points further comprises utilizing the determined centroid, second moment and third moment to select one or more watermark embedding locations and strengths; and embedding the watermark at the selected locations at the selected strengths.

17. A method in accordance with Claim 1 wherein said embedding a watermark comprises embedding the watermark in both audio and video of the digital movie.

18. A method in accordance with Claim 1 wherein said embedding a watermark comprises determining a digital signature of at least one of an audio stream or a video stream of the digital movie and embedding the digital signature of said stream into the other said stream.

19. A method in accordance with Claim 18 wherein a digital signature of the audio stream is embedded in the video stream and a digital signature of the video stream is embedded in the audio stream.

20. A method in accordance with Claim 1 wherein the movie is compressed, and said embedding comprises embedding a watermark in compressed data of the movie.

21. A method in accordance with Claim 20 wherein said embedding a watermark in compressed data of the movie further comprises modulating a quantization index.

22. A method for decoding a watermark encoded movie, said method comprising:

determining a location of an object of reference in a video frame of a movie;

determining a centroid, second moment, and third moment of the object of reference;

locating watermark locations known in a movie metric utilizing a metric adjusted in accordance with the location of the object of reference and said centroid, second moment, and third moment; and

decoding the watermark at said watermark locations located utilizing the adjusted metric.

23. A method in accordance with Claim 22 further comprising utilizing a secret key K to define a patch shape in which watermark bits are embedded.

$$\vec{r}_0 = \frac{\sum_i \rho_i \vec{r}_i}{}$$

24. A method in accordance with Claim 22 wherein $dA = dxdy$, $\rho(a_i)$ is the relative intensity of a particular color of pixel $a_i$, and $r_i$ is the distance between an origin of the image and pixel $a_i$, and said determining a centroid, second moment, and third moment of the object of reference further comprises defining a new origin and second and third moments utilizing relationships written:

$$\vec{r}_0 = \frac{\sum_i \rho_i \vec{r}_i}{\sum_i \rho_i} = (x_0, y_0),$$

$$R = \sqrt{\frac{\sum_i \rho_i (\vec{r}_0 - \vec{r}_i)^2}{\sum_i \rho_i}},$$

and

$$\vec{\Re} = \sqrt[3]{\frac{\sum_i \rho_i (\vec{r}_0 - \vec{r}_i)^3}{\sum_i \rho_i}}, \quad \Re_x = \sqrt[3]{\frac{\sum_i \rho_i (x_0 - x_i)^3}{\sum_i \rho_i}}, \quad \text{and} \quad \Re_y = \sqrt[3]{\frac{\sum_i \rho_i (y_0 - y_i)^3}{\sum_i \rho_i}}.$$

25. An apparatus for embedding a watermark in a digital movie, said apparatus configured to:

buffer portions of an electronic digital representation of a digital movie in at least one digital representation domain;

embed an electronic watermark into at least one said buffered digital representation domain of the movie; and

present portions of the digital movie while said embedding is occurring.

26. An apparatus in accordance with Claim 25 wherein said apparatus is configured to embed a watermark uniquely indicative of a digital presentation device or projector, or indicative or the venue of a theater.

27. An apparatus in accordance with Claim 26 wherein said apparatus is configured to embed a watermark indicative of the venue of a theater.

28. An apparatus in accordance with Claim 26 wherein said apparatus is configured to embed a watermark indicative of the time of said presenting the movie.

29. An apparatus in accordance with Claim 28 wherein said apparatus is configured to embed the watermark into a plurality of digital representation domains of the movie.

30. An apparatus in accordance with Claim 29 wherein said plurality of digital representation domains comprise at least a temporal domain and a frequency domain.

31. An apparatus in accordance with Claim 26 wherein said apparatus is configured to embed portions of said watermark across plural frames of the movie.

32. An apparatus in accordance with Claim 31 wherein said watermark includes not more than 50 bits.

33. An apparatus in accordance with Claim 25 wherein to said embed said watermark, said apparatus is configured to generate an image-based human visual model JND$(x,y)_{f(t)}$ that governs watermark strength $\alpha$, wherein f($t$) is a frame of video from the movie, and wherein the watermarked frame $f'(t)$ is written:

$$f'(t) = f(t) + \alpha(\text{JND}(x, y)_{f(t)})W,$$

wherein $W$ is the watermark.

**34.** An apparatus in accordance with Claim 25 wherein to embed said watermark, said apparatus is configured to generate an image-based human visual model JND$(x, y)_{f(t)}$ that governs watermark strength $\alpha$, wherein $f(t)$ is a frame of video from the movie, wherein the watermarked frame $f'(t)$ is written:

$$f'(t) = f(t) + ((\gamma(t) \times (1 - VM(t)))) \times (\alpha \times JND(x, y)_{f(t)}) \times W,$$

wherein $t$ is time, $W$ is the watermark, $\gamma(t)$ is a function of $t$, $\alpha$ is a parameter corresponding to a watermark weight; and VM$(t) = 1$ when $VD(t) > \delta$ and VM$(t) = $ VD$(t)$ otherwise, where $\delta$ is a parameter, and VD$(t)$ is a three dimensional video human model.

**35.** An apparatus in accordance with Claim 25 wherein to embed said watermark, said apparatus is configured to generate an image-based human visual model JND$(x,y)_{f(t)}$ that governs watermark strength $\alpha$, wherein $f(t)$ is a frame of video from the movie, wherein the watermarked frame $f'(t)$ is written:

$$f'(t) = f(t) + \gamma(t) \times \alpha \times JND(x,y)_t \times F_{SS}(W, S_i)$$

wherein $W$ is the watermark, $\gamma(t)$ is a function of $t$, $F_S S(W, S_i)$ is a spread spectrum watermarking algorithm that embeds watermark $W$ on a frame-by-frame basis; $S_i$ denotes the ith scene, and $\alpha$ is a parameter.

**36.** An apparatus in accordance with Claim 25 wherein to embed the watermark, said apparatus is configured to:

partition a video data stream of the movie based on a preselected criterion into $N$ segments $S_1, S_2, ..., S_N$, with corresponding durations $T_{S_1}, T_{S_2}, ... T_{SN}$; and

change durations of some of the segments, depending upon the watermark that is applied.

**37.** An apparatus in accordance with Claim 25 wherein said apparatus is further configured to define reference points in video images of the movie utilizing mass moments and to embed a watermark in locations of video frames relative to the defined reference points.

**38.** An apparatus in accordance with Claim 37 wherein $dA = dxdy$, $\rho(\alpha_i)$ is the relative intensity of a particular color of pixel $\alpha_i$, and $r_i$ is the distance between an origin of the image and pixel $\alpha_i$, and to define said reference points in video images of the movie utilizing mass moments, said apparatus is further configured to define a new origin and second and third moments utilizing relationships written:

$$\vec{r}_0 = \frac{\sum_i \rho_i \vec{r}_i}{\sum_i \rho_i} = (x_0, y_0),$$

$$R = \sqrt{\frac{\sum_i \rho_i (\vec{r}_0 - \vec{r}_i)^2}{\sum_i \rho_i}},$$

and

$$\vec{\mathfrak{R}} = \sqrt[3]{\frac{\sum_i \rho_i (\vec{r}_0 - \vec{r}_i)^3}{\sum_i \rho_i}}, \quad \mathfrak{R}_x = \sqrt[3]{\frac{\sum_i \rho_i (x_0 - x_i)^3}{\sum_i \rho_i}}, \quad \text{and} \quad \mathfrak{R}_y = \sqrt[3]{\frac{\sum_i \rho_i (y_0 - y_i)^3}{\sum_i \rho_i}}.$$

**39.** An apparatus in accordance with Claim 37 wherein said apparatus is further configured to embed a key or object of reference in a video frame of the movie to define a physical origin.

**40.** An apparatus in accordance with Claim 37 wherein to define said reference points in video images of the movie, said apparatus is further configured to define an object of reference; determine the centroid of the object of reference; and determine the second moment and third moment of the object of reference;

and further wherein to embed a watermark in locations of video frames relative to the defined reference points, said apparatus is further configured to utilize the determined centroid, second moment and third moment to select one or more watermark embedding locations and strengths; and to embed the watermark at the selected locations at the selected strengths.

41. An apparatus in accordance with Claim 25 wherein said apparatus is configured to embed the watermark in both audio and video of the digital movie.

42. An apparatus in accordance with Claim 25 wherein to embed said watermark, said apparatus is configured to determine a digital signature of at least one of an audio stream or a video stream of the digital movie and to embed the digital signature of said stream into the other said stream.

43. An apparatus in accordance with Claim 42 configured to embed a digital signature of the audio stream embedded in the video stream and to embed a digital signature of the video stream in the audio stream.

44. An apparatus in accordance with Claim 25 configured to embed a watermark in compressed data of the movie.

45. An apparatus in accordance with Claim 44 wherein to embed said watermark in compressed data of the movie, said apparatus is configured to modulate quantization indices.

46. An apparatus for decoding a watermark encoded movie, said apparatus configured to:

determine a location of an object of reference in a video frame of a movie;

determine a centroid, second moment, and third moment of the object of reference;

locate watermark locations known in a movie metric utilizing a metric adjusted in accordance with the location of the object of reference and said centroid, second moment, and third moment; and

decode the watermark at said watermark locations located utilizing the adjusted metric.

47. An apparatus in accordance with Claim 46 further configured to utilize a secret key K to determine a patch shape in which watermark bits are embedded.

48. An apparatus in accordance with Claim 46 wherein $dA = dxdy$, $\rho(a_i)$ is the relative intensity of a particular color of pixel $a_i$, and $r_i$ is the distance between an origin of the image and pixel $a_i$, and to determine a centroid, second moment, and third moment of the object of reference, said apparatus is further configured to define a new origin and second and third moments utilizing relationships written:

$$\vec{r_0} = \frac{\sum_i \rho_i \vec{r_i}}{\sum_i \rho_i} = (x_0, y_0),$$

$$R = \sqrt{\frac{\sum_i \rho_i (\vec{r_0} - \vec{r_i})^2}{\sum_i \rho_i}},$$

and

$$\vec{\Re} = \sqrt[3]{\frac{\sum_i \rho_i (\vec{r_0} - \vec{r_i})^3}{\sum_i \rho_i}}, \quad \Re_x = \sqrt[3]{\frac{\sum_i \rho_i (x_0 - x_i)^3}{\sum_i \rho_i}}, \quad \text{and} \quad \Re_y = \sqrt[3]{\frac{\sum_i \rho_i (y_0 - y_i)^3}{\sum_i \rho_i}}.$$

**FIG. 1**

Fig. 2

Fig. 3

Fig. 4

Before watermarking

43  43  43  43  43  43  43

$T_{S_1}$  $T_{S_2}$  $T_{S_3}$  $T_{S_4}$  $T_{S_5}$  $T_{S_6}$  $T_{S_7}$

41

Segment

$s_1$  $s_2$  $s_3$  $s_4$  $s_5$  $s_6$  $s_7$

time

After watermarking

$T'_{S_1}$  $T'_{S_2}$  $T'_{S_3}$  $T'_{S_4}$  $T'_{S_5}$  $T'_{S_6}$  $T'_{S_7}$

41'

Segment

$s'_1$  $s'_2$  $s'_3$  $s'_4$  $s'_5$  $s'_6$  $s'_7$

Fig. 6

Fig. 5

Fig. 7

Fig. 8

Fig. 9

Secret key K

Original image

Define object of reference ~100

Calculate centroid of reference object ~102

Calculate 2nd and 3rd moments ~104

Generate patches ~108

Define patch shape ~106

Embed watermark ~110

watermarked image

Secret key K

Watermarked image

Calculate object of reference  /112

Calculate centroid of reference object  /114

Calculate 2nd and 3rd moments  /116

calculate patch shape  /118

calculate patches (modified)  /120

decode watermark  →  WATERMARK  /122

Fig. 10

Original image → Define object of reference (124) → Calculate centroid of reference object (126) → Calculate 2nd and 3rd moments (128) → calculate watermark embedding location and watermark strength (130) → Embed watermark (132) → watermarked image

Fig. 11

WATERMARKED
IMAGE

CALCULATE OBJECT
OF REFERENCE — 134

CALCULATE
CENTROID OF
REFERENCE OBJECT — 136

CALCULATE 2ND
AND 3RD MOMENTS — 138

140 — DETERMINE WATERMARK
EMBEDDING LOCATIONS

142 — DECODE
WATERMARK

WATERMARK

*FIG. 12*

EP 1 437 897 A2

Fig. 13

Fig. 14

EP 1 437 897 A2

Fig. 16

Fig. 15

TIME

VIDEO STREAM

60

SIGNATURE GENERATOR

66

SIGNATURE GENERATOR

64

AUDIO STREAM

62

*FIG. 17*

FREQUENCY DOMAIN WATERMARK EMBEDDING — 44

BUFFER — 37

DIGITAL THEATER DISPLAY — 40

*FIG. 18*